# DEMANDE DE BREVET EUROPEEN

(11) **EP 4 144 550 A1**
(43) Date de publication de la demande: **08.03.2023**
(21) Numéro de dépôt: 22193633.9
(22) Date de dépôt: 02.09.2022
(51) Int. Cl.: B60H 1/00, B60H 1/03, B60H 1/24, B60L 58/26, F16K 15/18, F16K 11/052, F16K 15/03

(54) **VANNE AÉRAULIQUE**

(30) Priorité: 07.09.2021 FR 2109365
(71) Demandeur: Renault s.a.s, 92100 Boulogne Billancourt (FR)
(72) Inventeur: VEILLARD, Arnaud, 78280 GUYANCOURT (FR)

(57) **Abrégé**

Vanne aéraulique (30) comprenant
- une première ouverture (301) destinée à être raccordée à une ouverture (21) d'un habitacle (2) d'un véhicule automobile (100), l'ouverture de l'habitacle étant destinée à être équipée d'un extracteur d'air (6) et la vanne (30) étant destinée à être située à l'extérieur de l'habitacle (2), et
- une deuxième ouverture (302) destinée à être raccordée à un circuit aéraulique de climatisation d'une batterie d'alimentation d'un moteur électrique d'entraînement d'un véhicule automobile.

## Description

L'invention concerne une vanne aéraulique. L'invention porte aussi sur un ensemble de systèmes de climatisation comprenant une telle vanne. L'invention porte aussi sur un véhicule comprenant un tel ensemble de systèmes de climatisation. L'invention porte aussi sur un procédé de commande d'un tel ensemble de systèmes de climatisation. L'invention porte également sur un programme d'ordinateur mettant en oeuvre le procédé mentionné. L'invention porte enfin sur un support d'enregistrement sur lequel est enregistré un tel programme.

Les performances des batteries de véhicules électriques ou hybrides dépendent fortement de leur température de fonctionnement. Il est donc nécessaire de maitriser les plages de températures auxquelles sont soumises de telles batteries. A cet effet, les batteries sont équipées de systèmes de climatisation.

Toutefois, les systèmes de climatisation pour batteries consomment beaucoup d'énergie. Une solution envisagée pour réduire la consommation d'énergie des systèmes de climatisation pour batteries consiste à prélever l'air climatisé de l'habitacle par une ouverture réalisée dans la caisse du véhicule, pour le réutiliser dans le système de climatisation pour batterie.

Cependant, la mise en oeuvre de cette solution peut s'avérer bruyante et générer un inconfort sonore pour les passagers du véhicule. Selon le régime moteur, le bruit du roulage du véhicule ne peut pas toujours couvrir le bruit généré par un tel système de climatisation pour batterie. Le fonctionnement du système de climatisation pour batterie est donc généralement bridé lors d'un roulage à faible vitesse, afin de limiter le bruit qu'il génère, ce qui réduit son efficacité.

Le but de l'invention est de fournir un dispositif et un procédé remédiant aux inconvénients ci-dessus et améliorant les dispositifs et procédés de climatisation pour batterie connus de l'art antérieur. En particulier, l'invention permet de réaliser un dispositif et un procédé qui soient simples et fiables, qui réduisent la consommation d'énergie et qui améliorent l'efficacité de la climatisation d'une batterie, notamment lorsque le véhicule circule à faible vitesse.

A cet effet, l'invention porte sur une vanne aéraulique comprenant
- une première ouverture destinée à être raccordée à une ouverture d'un habitacle d'un véhicule automobile, l'ouverture de l'habitacle étant destinée à être équipée d'un extracteur d'air et la vanne étant destinée à être située à l'extérieur de l'habitacle, et
- une deuxième ouverture destinée à être raccordée à un circuit aéraulique de climatisation d'une batterie d'alimentation d'un moteur électrique d'entraînement d'un véhicule automobile.

La première ouverture peut comprendre un extracteur d'air destiné à équiper une ouverture de l'habitacle.

La vanne aéraulique peut comprendre une troisième ouverture destinée à être raccordée à un environnement extérieur d'un véhicule automobile et un volet, et le volet peut être agencé de sorte à :
- mettre en communication les première et deuxième ouvertures dans une première configuration du volet, et
- mettre en communication les première et troisième ouvertures et/ou mettre en communication les deuxième et troisième ouvertures dans une deuxième configuration du volet.

L'invention porte en outre sur un ensemble de climatisation comprenant
- un premier système de climatisation d'une batterie d'alimentation d'un moteur électrique d'entraînement d'un véhicule automobile,
- un deuxième système de climatisation d'un habitacle du véhicule automobile, et
- une vanne aéraulique selon l'invention, la première ouverture de la vanne aéraulique étant raccordée à une ouverture de l'habitacle, et la deuxième ouverture étant raccordée à un circuit aéraulique du premier système de climatisation.

L'invention porte également sur un véhicule automobile comprenant un ensemble de climatisation selon l'invention.

L'invention porte de plus sur un procédé de commande d'un ensemble de climatisation d'un véhicule automobile, notamment procédé de commande d'un ensemble selon l'invention, comprenant une phase d'utilisation d'un air prélevé en sortie d'un extracteur d'air disposé sur une ouverture d'un habitacle du véhicule automobile, pour climatiser une batterie d'alimentation d'un moteur électrique d'entrainement du véhicule automobile.

Le procédé peut comprendre les étapes suivantes :
- une étape de détermination d'une source d'air d'un premier système de climatisation de l'ensemble de climatisation, la source d'air pouvant être un environnement extérieur du véhicule automobile, ou la source d'air pouvant être issue d'un deuxième système de climatisation de l'ensemble de climatisation,
- une étape d'isolation entre le premier système de climatisation et le deuxième système de climatisation, lorsque la source d'air est l'environnement extérieur du véhicule automobile, et une étape de raccordement du premier système de climatisation au deuxième système de climatisation lorsque la source d'air est issue du deuxième système de climatisation.

L'étape d'isolation peut comprendre un agencement d'un volet mobile d'une vanne aéraulique de l'ensemble de climatisation selon une deuxième configuration, et l'étape de raccordement peut comprendre un agencement du volet mobile de la vanne aéraulique de l'ensemble de climatisation selon une première configuration.

L'étape de détermination d'une source d'air du premier système de climatisation peut comprendre :
- une mesure d'une vitesse de déplacement du véhicule automobile, et/ou
- une mesure d'une température de l'habitacle équipé du deuxième système de climatisation, et/ou
- une mesure d'une température de l'air extérieur, et/ou
- une mesure d'une température d'une batterie d'alimentation d'un moteur électrique d'entraînement du véhicule automobile et une comparaison de la température de la batterie à un seuil maximal de température,
la source d'air étant déterminée comme étant issue du deuxième système de climatisation si :
- la vitesse de déplacement du véhicule est non nulle ou supérieure à 10 km/h,
- la température de la batterie est inférieure au seuil de maximal température ou la température de l'habitacle est inférieure à la température extérieure,
et, dans les autres cas, la source d'air étant déterminée comme étant l'environnement extérieur du véhicule automobile.

Le premier système de climatisation équipant la batterie et le premier système de climatisation comprenant un moyen conventionnel de climatisation de la batterie, notamment par eau ou par fluide réfrigérant, l'étape d'isolation peut comprendre une mise en œuvre du moyen conventionnel de climatisation, et l'étape de raccordement peut comprendre
- une comparaison de la température de la batterie à un seuil minimal de température et au seuil maximal de température, puis
- une mise en œuvre du moyen conventionnel de climatisation si la température de la batterie est supérieure ou égale au seuil de température maximal, ou inférieure ou égale au seuil de température minimal, ou
- un arrêt du moyen conventionnel de climatisation si la température de la batterie est comprise entre le seuil minimal de température et le seuil maximal de température.

L'invention porte également sur un dispositif de commande d'un ensemble de climatisation d'un véhicule. Le dispositif comprend des éléments matériels et/ou logiciels mettant en œuvre le procédé tel que défini précédemment, notamment des éléments matériels et/ou logiciels conçus pour mettre en œuvre le procédé selon l'invention, et/ou le dispositif comprenant des moyens de mettre en œuvre le procédé tel que défini précédemment.

L'invention porte également sur un produit programme d'ordinateur comprenant des instructions de code de programme enregistrées sur un support lisible par ordinateur pour mettre en œuvre les étapes du procédé tel que défini précédemment lorsque ledit programme fonctionne sur un ordinateur. L'invention porte également sur un produit programme d'ordinateur téléchargeable depuis un réseau de communication et/ou enregistré sur un support de données lisible par un ordinateur et/ou exécutable par un ordinateur, comprenant des instructions qui, lorsque le programme est exécuté par l'ordinateur, conduisent celui-ci à mettre en œuvre le procédé tel que défini précédemment.

L'invention porte encore sur un support d'enregistrement de données, lisible par un ordinateur, sur lequel est enregistré un programme d'ordinateur comprenant des instructions de code de programme de mise en œuvre du procédé tel que défini précédemment. L'invention porte encore sur un support d'enregistrement lisible par ordinateur comprenant des instructions qui, lorsqu'elles sont exécutées par un ordinateur, conduisent celui-ci à mettre en œuvre le procédé tel que défini précédemment.

L'invention porte encore sur un signal d'un support de données, portant le produit programme d'ordinateur tel que défini précédemment.

Le dessin annexé représente, à titre d'exemple, un mode de réalisation d'une vanne aéraulique selon l'invention, un mode de réalisation d'un ensemble de systèmes de climatisation selon l'invention et un mode d'exécution d'un procédé de commande d'un ensemble de systèmes de climatisation selon l'invention.
[Fig. 1] La figure 1 représente un mode de réalisation d'un véhicule automobile équipé d'une vanne aéraulique selon l'invention.
[Fig. 2] La figure 2 représente un véhicule automobile équipé d'un système de climatisation pour habitacle sans mise en œuvre de l'invention.
[Fig. 3] La figure 3 représente un véhicule automobile équipé d'un ensemble de systèmes de climatisation selon l'invention.
[Fig. 4] La figure 4 est une première vue en perspective d'une vanne aéraulique selon l'invention.
[Fig. 5] La figure 5 est une deuxième vue en perspective d'une vanne aéraulique selon l'invention.
[Fig. 6] La figure 6 est une troisième vue en perspective d'une vanne aéraulique selon l'invention.
[Fig. 7] La figure 7 représente l'assemblage d'une vanne aéraulique selon l'invention sur une caisse de véhicule automobile.
[Fig. 8] La figure 8 représente le fonctionnement d'un ensemble de climatisation selon l'invention dans une première configuration de la vanne aéraulique.
[Fig. 9] La figure 9 représente le fonctionnement d'un ensemble de climatisation selon l'invention dans une deuxième configuration de la vanne aéraulique.
[Fig. 10] La figure 10 représente un mode de réalisation d'une architecture électronique d'un ensemble de climatisation selon l'invention.
[Fig. 11] La figure 11 est un ordinogramme d'un mode d'exécution d'un procédé de commande d'un ensemble de climatisation.
[Fig. 12] La figure 12 est une représentation alternative d'un procédé de commande d'un ensemble de climatisation.

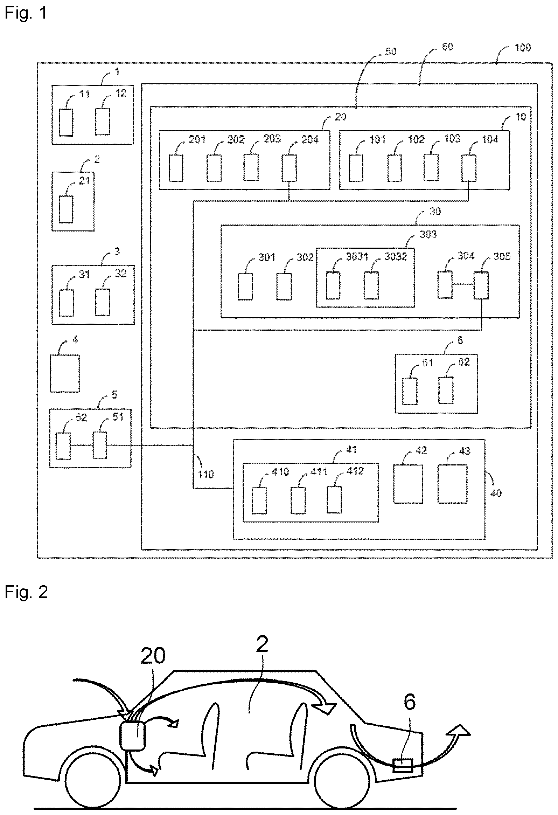

Un exemple d'un véhicule électrique ou hybride 100 équipé d'un mode de réalisation d'un vanne aéraulique pour batterie est décrit ci-après en référence aux figures 1 à 3.

Dans la suite du document, le terme « aéraulique » est utilisé pour caractériser un élément de système s'appliquant à un écoulement d'air, ou utilisant un écoulement d'air. Par exemple, l'expression « vanne aéraulique » signifie « vanne pour de l'air », ou « vanne pour un flux d'air ». De même, le terme « conduite aéraulique » signifie « conduite pour de l'air » ou « conduite pour un flux d'air ».

Le véhicule 100 est un véhicule de tout type, par exemple un véhicule de tourisme, un véhicule utilitaire ou un véhicule de transport en commun.

Le véhicule automobile 100 comprend principalement les éléments suivants :
- une batterie électrique 1,
- un habitacle 2,
- un ensemble 50 de systèmes de climatisation, comprenant un premier système de climatisation 10 pour batterie 1, un deuxième système de climatisation pour habitacle 20, une vanne aéraulique 30, un extracteur d'air 6, et une unité de commande électronique 40,
- une caisse 3,
- un capteur de température extérieure 4, et
- un système 5 de contrôle de la vitesse du véhicule automobile 100, comprenant un capteur 52 de la vitesse de déplacement du véhicule automobile 100.

La batterie électrique 1 est une batterie dite de traction, c'est-à-dire une batterie d'alimentation d'un moteur électrique d'entraînement du véhicule automobile 100. La batterie 1 peut être de type Lithium-Ion. Alternativement, elle peut être une batterie tout solide.

La batterie 1 comprend une pluralité de cellules de batteries qui sont disposées dans un boîtier hermétique 11. La batterie 1 est également équipée d'un capteur de température 12.

La batterie 1 est équipée du premier système de climatisation 10. Le système de climatisation 10 comprend un circuit aéraulique formé par le boîtier 11 associé à une canalisation d'entrée d'air 102 et une canalisation de sortie d'air 103, ces dernières étant raccordées au boîtier 11. Dans un mode de réalisation, le système de climatisation 10 peut également comprendre un premier ventilateur 104 créant un flux d'air circulant de la canalisation d'entrée 102 à la canalisation de sortie 103. Le premier ventilateur 104 est préférentiellement situé à proximité de la canalisation d'entrée 102, c'est-à-dire en amont de la batterie 1 par rapport à l'écoulement de l'air dans le boîtier 11.

La position des canalisations d'entrée et de sortie 102, 103 définissent ensemble une direction de circulation de l'air dans le boîtier 11. Avantageusement, les faces principales des cellules de batterie sont disposées parallèlement à la direction de circulation de l'air dans le boîtier 11, de sorte à, d'une part, perturber le moins possible l'écoulement du flux d'air et, d'autre part, maximiser la surface de contact du flux d'air avec l'ensemble des cellules.

Dans un mode de réalisation préférentiel, le premier système de climatisation 10 comprend en outre un moyen conventionnel de climatisation 101 par eau ou par fluide réfrigérant. Le moyen conventionnel de climatisation 101 est disposé à l'intérieur du boîtier 11, à proximité et/ou au contact des cellules de batterie. Avantageusement, le moyen conventionnel de climatisation 101 (ou l'enveloppe du moyen conventionnel de climatisation 101) fournit une surface sensiblement plane destinée à être en contact avec une face latérale de chacune des cellules de batterie, le contact pouvant être un contact direct ou un contact par l'intermédiaire d'une interface thermique. Par exemple, la surface sensiblement plane du moyen conventionnel de climatisation 101 pourrait être disposée parallèlement au plancher du véhicule automobile 100, et les cellules de batterie pourraient être disposées perpendiculairement à la surface sensiblement plane du moyen conventionnel de climatisation 101, de sorte que les faces principales des cellules soient parallèles à la direction de circulation de l'air dans le boîtier.

Le premier système de climatisation 10 peut comprendre un groupe de climatisation incluant un compresseur, un détendeur, un condenseur et un évaporateur.

Dans un mode de réalisation minimal le premier système de climatisation 10 pourrait être limité au circuit aéraulique ; dans ce cas il ne comprendrait pas le moyen conventionnel de climatisation 101. La climatisation de la batterie se résumerait alors à un flux d'air traversant le boîtier 11, la température du flux d'air pouvant être déterminée par le deuxième système de climatisation 20 décrit ci-après.

L'habitacle 2 est un espace réservé aux occupants du véhicule. Il est correspond au volume intérieur défini par la caisse 3 du véhicule automobile 100.

L'habitacle 2 est équipé d'un capteur de température 203 mesurant la température de l'air de l'habitacle.

L'habitacle 2 est équipé du deuxième système de climatisation 20. Le deuxième système de climatisation 20 prélève de l'air extérieur par aspiration, via des ouvertures situées dans une zone avant du véhicule automobile 100. L'aspiration est préférentiellement générée par un deuxième ventilateur 201 du deuxième système de climatisation 20. Le deuxième système de climatisation 20 comprend en outre un capteur 202 de vitesse de rotation du deuxième ventilateur 201.

Le deuxième système de climatisation 20 peut comprendre un groupe de climatisation incluant un compresseur, un détendeur, un condenseur et un évaporateur.

L'air extérieur prélevé par le deuxième système de climatisation 20 peut être chauffé ou refroidi avant son entrée dans l'habitacle 2, selon les réglages de température effectués par les usagers du véhicule. L'air prélevé est ensuite propulsé par le ventilateur 201 dans l'habitacle 2, et il circule ainsi d'avant en arrière du véhicule. Le flux d'air ainsi généré est représenté schématiquement par la figure 2, dans laquelle un véhicule automobile est représenté sans mise en œuvre de l'invention.

Le deuxième système de climatisation 20 est caractérisé par un débit d'air maximal, ce débit pouvant par exemple atteindre plusieurs centaines de kilogrammes d'air par heure, par exemple 450 ou 500 kilogrammes d'air par heure.

Le flux d'air s'évacue par un extracteur d'air 6 situé dans une zone arrière du véhicule, généralement sur la jupe de la caisse 31 ou sur un côté de caisse 32. L'air peut être partiellement recirculé dans l'habitacle.

Avec ou sans mise en œuvre de l'invention, la présence d'un extracteur d'air sur la caisse du véhicule est nécessaire pour garantir la qualité de l'air dans l'habitacle 2, notamment pour éviter l'accumulation de dioxyde de carbone dans l'habitacle 2 et pour évacuer l'humidité produite par la respiration des usagers du véhicule. L'extracteur d'air permet également de maintenir une pression confortable dans l'habitacle 2 quel que soit le débit d'air généré par le deuxième système de climatisation 20. L'extracteur d'air a également pour rôle d'évacuer une surpression créée dans l'habitacle 2 lors d'une fermeture ou d'un claquement de l'un des ouvrants du véhicule (portes ou hayon), et ainsi de permettre la fermeture des ouvrants.

L'extracteur d'air comprend généralement un ensemble de clapets mobiles 61, 62 qui permettent l'écoulement d'un flux d'air de l'intérieur de l'habitacle vers l'extérieur de l'habitacle. Avantageusement, les clapets mobiles 61, 62 offrent très peu de résistance à l'ouverture, notamment lorsque la pression de l'habitacle est supérieure à la pression de l'environnement extérieur du véhicule. A l'inverse, les clapets mobiles 61, 62 s'opposent mécaniquement à une entrée d'air de l'extérieur vers l'intérieur du véhicule. En conséquence, un extracteur d'air ne consiste de préférence pas en une simple ouverture de l'habitacle.

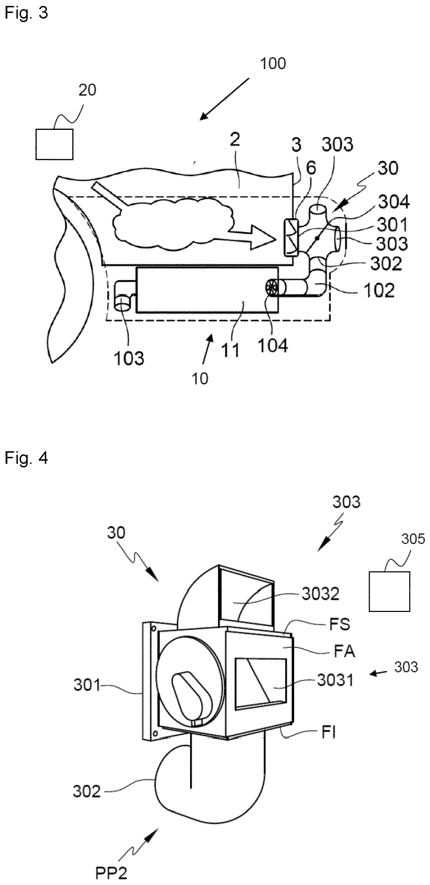

Comme cela est illustré par la figure 3, le premier système de climatisation 10 est raccordé au deuxième système de climatisation 20 par l'intermédiaire de la vanne aéraulique 30.

La vanne aéraulique 30 comprend
- une première ouverture 301 destinée à être raccordée une ouverture 21 de l'habitacle 2, l'ouverture 21 de l'habitacle étant elle-même destinée à être équipée d'un extracteur d'air 6 et la vanne aéraulique 30 se situant à l'extérieur de l'habitacle 2, et
- une deuxième ouverture 302 destinée à être raccordée au circuit aéraulique du premier système de climatisation 10 de la batterie 1.

L'ouverture 21 de l'habitacle et la première ouverture 301 de la vanne collaborent selon l'un des premier et deuxième modes de réalisation décrits ci-après :
- dans un premier mode de réalisation, un extracteur d'air 6 est directement disposé sur l'ouverture 21 de l'habitacle ; la première ouverture 301 de la vanne 30 n'est donc pas équipée d'un extracteur d'air,
- dans un deuxième mode de réalisation, la première ouverture 301 de la vanne 30 comprend un extracteur d'air 6 destiné à équiper l'ouverture 21 de l'habitacle 2.

La vanne aéraulique 30 selon le deuxième mode de réalisation est plus spécifiquement décrite par les figures 4 à 6.

Dans un mode de réalisation préférentiel, la vanne aéraulique 30 comprend en outre
- une troisième ouverture 303 destinée à être raccordée à l'environnement extérieur du véhicule automobile 100,
- un volet 304 et un actionneur de volet 305 destiné à commander le mouvement du volet 304.

Avantageusement, la troisième ouverture 303 de la vanne peut être décomposée en deux ouverture séparées 3031, 3032, afin de séparer un flux d'air entrant de l'extérieur vers la vanne et un flux d'air sortant de la vanne vers l'extérieur.

La vanne 30 comprend une partie centrale PC à laquelle sont rattachées trois parties périphériques PP1, PP2, PP3, de sorte qu'un flux d'air circulant d'une partie périphérique à une autre partie périphérique transite par la partie centrale PC.

La partie centrale PC comprend une première et une deuxième sous-parties PC1, PC2, la sous partie PC2 s'emboitant dans la sous-partie PC1. Dans un mode de réalisation, les sous-parties PC1 et PC2 ont la forme d'un cube creux. Alternativement, les sous-parties PC1 et PC2 pourraient avoir la forme de deux parallélépipèdes rectangles creux.

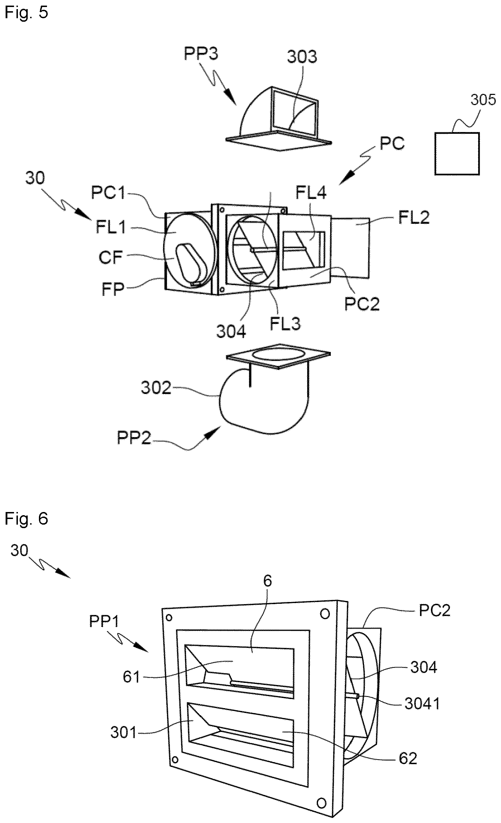

La partie centrale PC contient le volet 304, plus spécifiquement visible sur la figure 5. Le volet 304 a la forme d'une plaque fine, de forme carrée ou rectangulaire. Il comprend un axe central 3041, qui est une de ses médiatrices et dont les extrémités sont destinées à être fixées au centre de deux faces latérales FL1, FL2 de la sous-partie PC1, les faces latérales FL1 et FL2 étant opposées, pleines et de forme carrée. La fixation de l'axe central 3041 aux faces latérales FL1, FL2 permet un mouvement de rotation du volet 304 autour de l'axe central 3041. Le volet 304 est dans ce cas du type d'un volet papillon.

Les deux faces latérales FL1, FL2 de la première sous-partie PC1 ne présentent aucune ouverture. Avantageusement, elles comprennent chacune une contre-forme circulaire CF guidant le mouvement de rotation du volet 304. Le mouvement est également guidé par deux évidements circulaires présents sur deux faces latérales FL3, FL4 de la deuxième sous-partie PC2, les faces latérales FL3 et FL4 étant respectivement placées en vis-à-vis des faces latérales FL1, FL2 de la première sous-partie PC1 lorsque les sous-parties PC1 et PC2 sont assemblées.

Ainsi, les deux sous-parties PC1, PC2 collaborent pour permettre l'assemblage et le guidage du volet dans la partie centrale PC. Les dimensions respectives des sous-parties PC1, PC2 et du volet 304 permettent à l'assemblage entre la partie centrale PC et le volet 304 de compartimenter l'espace intérieur de la partie centrale PC en deux sous-espaces hermétiquement séparés, notamment lorsque le volet est disposé selon la direction de l'une ou l'autre des diagonales des faces latérales carrées FL1, FL2.

La partie centrale PC comprend également quatre autres faces, qui sont ouvertes :
- une face antérieure FA qui n'est rattachée à aucune partie périphérique,
- une face postérieure FP qui est rattachée à la première partie périphérique PP1,
- une face inférieure FI qui est rattachée à la deuxième partie périphérique PP2, et
- une face supérieure FS qui est rattachée à la troisième partie périphérique PP3.

La face antérieure FA comprend une ouverture 3031 destinée à l'entrée d'un flux d'air extérieur vers la vanne 30, et ce dans un but premier d'alimenter en air le premier système de climatisation 10 dédié à la gestion thermique de la batterie.

La première partie périphérique PP1 est reliée à la face postérieure FP de la partie centrale PC. Elle comprend la première ouverture 301, celle-ci étant équipée, dans le mode de réalisation présenté, d'un extracteur d'air 6 comprenant deux volets 61 et 62. La première partie périphérique PP1 présente également une surface plane destinée à être fixée au niveau d'une ouverture de la caisse 3, pour le raccordement de la vanne 30 au deuxième système de climatisation 20.

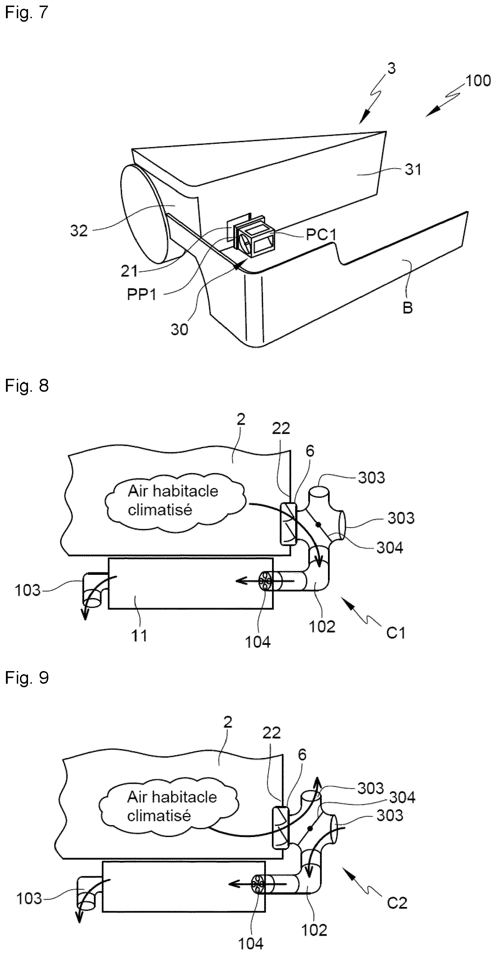

La figure 7 illustre un mode d'assemblage de la première partie périphérique PP1 au niveau d'une ouverture 21 de l'habitacle 2, l'ouverture étant réalisée sur la jupe 31 de la caisse 3. Dans un mode d'assemblage alternatif, l'ouverture 21 pourrait être réalisée sur les côtés de caisse 32. Dans ces deux modes d'assemblage, la vanne aéraulique 30 est disposée entre la caisse 3 et le bouclier B du véhicule.

Le bouclier étant déformable afin d'absorber des chocs légers, la vanne est préférablement implantée au plus près de la caisse 3 et en dehors de la zone de déformation du bouclier B pour éviter qu'elle ne soit endommagée lors de phases de manœuvres de stationnement du véhicule automobile 100.

L'implantation de la vanne aéraulique 30 pourra être facilitée si l'extracteur d'air 6 est situé sur le côté de caisse, la partie du bouclier en regard de cette zone étant soumise à des déformations moindres.

La deuxième partie périphérique PP2 de la vanne 30 se présente sous la forme d'un conduit relié à la face inférieure FI de la partie centrale PC. L'extrémité libre du conduit porte la deuxième ouverture 302 destinée à être raccordée au circuit aéraulique du premier système de climatisation 10, notamment à la canalisation d'entrée d'air 102 du premier système de climatisation 10.

Dans le mode de réalisation présenté, les première et deuxième ouvertures 301, 302 sont orientées dans la même direction. Ainsi, lorsque la première partie périphérique PP1 est fixée au niveau d'une ouverture de l'habitacle située sur la jupe arrière de la caisse, alors la deuxième ouverture sera orientée vers une batterie située sous la caisse et à proximité de la jupe arrière.

La troisième partie périphérique PP3 de la vanne 30 se présente sous la forme d'un large conduit relié à la face supérieure FS de la partie centrale PC. L'extrémité libre du large conduit porte l'ouverture 3032 permettant la sortie d'un flux d'air de la vanne vers l'extérieur. Le large conduit est recourbé en son extrémité de sorte à orienter l'ouverture 3032 dans une direction opposée à la direction des première et deuxième ouvertures, c'est-à-dire dans une direction opposée à la jupe arrière du véhicule.

Grâce à un mouvement de rotation effectué autour de son axe 3041, le volet 304 peut être agencé de sorte à :
- mettre en communication les première et deuxième ouvertures 301, 302 dans une première configuration C1 du volet 304, et
- mettre en communication les première et troisième ouvertures 301, 303 et/ou mettre en communication les deuxième et troisième ouvertures 302, 303 dans une deuxième configuration C2 du volet 320.

Les mises en œuvre des première et deuxième configurations C1, C2 du volet 320 sont respectivement illustrées par les figures 8 et 9.

Dans la première configuration C1, le volet 304 est disposé selon une première diagonale des faces latérales FL1, FL2 de la partie centrale PC. Dans cette configuration, l'ouverture 303 est inactive, notamment l'entrée d'air issu de l'extérieur 3031 et la sortie d'air vers l'extérieur 3032 sont reliées entre elles. L'air climatisé issu de l'habitacle 2 est expulsé dans la vanne 30 via les extracteurs 6. Le volet 304 dirige ce flux d'air vers le premier système de climatisation 10.

Dans la première configuration C1, le flux d'air issu du deuxième système de climatisation 20 génère généralement une surpression dans le premier système de climatisation 10, cette surpression favorisant naturellement le déplacement de l'air notamment au contact des cellules de batterie. L'usage du premier ventilateur 104 peut être nécessaire pour accélérer l'écoulement de l'air dans le premier système de climatisation 10 et ainsi éviter une surpression inconfortable dans l'habitacle. Avantageusement, les dimensions du premier ventilateur 104 du premier système de climatisation 10 sont définies en fonction du débit d'air maximal dans l'habitacle 2, notamment le diamètre du premier ventilateur 104 est défini en fonction du débit d'air maximal dans l'habitacle.

Dans la deuxième configuration C2, le volet 304 est disposé selon une deuxième diagonale des faces latérales FL1, FL2 de la partie centrale PC. Dans cette configuration,
- l'air climatisé issu de l'habitacle 2 est expulsé vers l'air extérieur via les extracteurs 6 et l'ouverture 3032, et
- l'air extérieur entre dans la vanne 30 via l'ouverture 3031, et il est aspiré par le premier système de climatisation 10, notamment par action du premier ventilateur 104.

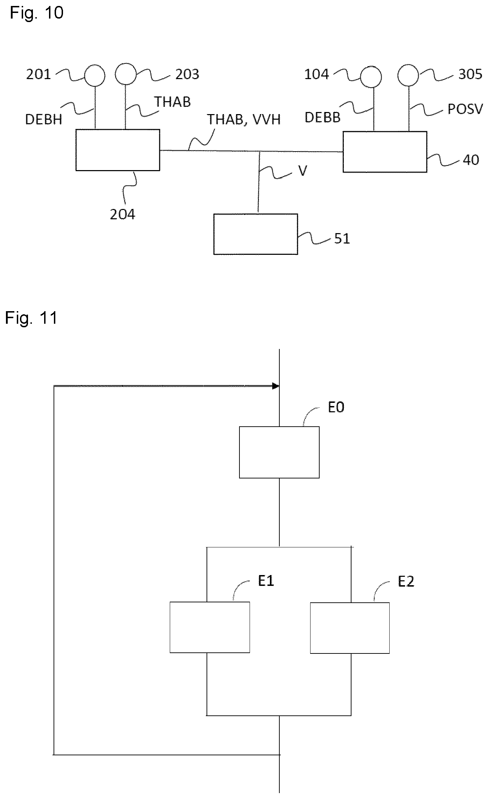

Un mode de réalisation d'une architecture électronique d'un ensemble de systèmes de climatisation selon l'invention est représenté par la figure 10. L'architecture décrite est une architecture distribuée comprenant trois unités de commande électroniques :
- une première unité de commande électronique 51 associée au système 5 de contrôle de la vitesse du véhicule automobile 100,
- une deuxième unité de commande électronique 204 associée au deuxième système de climatisation 20,
- une troisième unité de commande électronique 40 associée au premier système de climatisation 10, et à la vanne 30.

Les première, deuxième et troisième unités de commande sont connectées entre elles par un réseau de données 110, par exemple de type bus CAN. Le réseau de données 110 permet de transmettre des mesures et des requêtes entre les différentes unités de commande, notamment vers la troisième unité de commande 40.

Ainsi, la première unité de commande 51 transmet au réseau de données la vitesse V de déplacement du véhicule automobile 100.

La deuxième unité de commande 204 transmet une requête DEBH de débit d'air dans l'habitacle 2, cette requête étant générée par les réglages de climatisation déterminés par les usagers du véhicule. La requête de débit DEBH sera convertie en vitesse de rotation VVH du ventilateur de l'habitacle 201 et transmise sur le réseau de données. De plus, la deuxième unité de commande 204 transmet également une mesure de la température THAB de l'habitacle issue du capteur de température de l'habitacle 203.

La troisième unité de commande 40 traite les données reçues via le réseau de données, notamment la vitesse de V déplacement du véhicule, la température de l'habitacle THAB, et la vitesse VVH de rotation du ventilateur de l'habitacle pour générer :
- une requête POSV de position du volet 304 de la vanne aéraulique 30 vers les actionneurs 305 du volet 304, et/ou
- une requête DEBB de débit du ventilateur 104 de la batterie.

Dans un mode de réalisation l'unité de commande 40 comprend un microprocesseur 41, une mémoire électronique locale 42 et des interfaces de communication 43 permettant au microprocesseur 41 de communiquer avec le réseau de données et les éléments constituant l'ensemble de systèmes de climatisation 50, et les différents capteurs utilisés pour commander l'ensemble de systèmes de climatisation, notamment le capteur de température de la batterie 12, le capteur de température de l'habitacle 203, le capteur de température extérieure 4, le capteur 5 de vitesse de déplacement du véhicule automobile 100, le capteur 202 de vitesse de rotation du deuxième ventilateur 201.

Dans le mode de réalisation de l'invention, le microprocesseur 41 permet d'exécuter un logiciel comprenant les modules suivants :
- un module 410 de détermination d'une source d'air du premier système de climatisation, qui collabore avec le capteur de température de la batterie 12, le capteur de température de l'habitacle 203, le capteur de température extérieure 4, le capteur 5 de vitesse de déplacement du véhicule automobile 100,
- un module 411 d'isolation entre le premier système de climatisation et le deuxième système de climatisation, qui collabore avec l'ensemble de systèmes de climatisation 50,
- un module 412 de raccordement du premier système de climatisation au deuxième système de climatisation, qui collabore avec le capteur de température de la batterie 12, le capteur 202 de vitesse de rotation du deuxième ventilateur 201 et l'ensemble de systèmes de climatisation 50.

Un mode d'exécution d'un procédé de commande d'un ensemble 50 de climatisation est décrit ci-après en référence à la figure 11. Le procédé comprend trois étapes E0, E1 et E2, l'étape E0 enchainant sur l'étape E1 ou sur l'étape E2.

Dans une première étape E0, on détermine une source d'air du premier système de climatisation 10, la source d'air pouvant être l'environnement extérieur du véhicule automobile, ou la source d'air pouvant être le deuxième système de climatisation 20.

Pour cela, on détermine si la vitesse de déplacement V du véhicule 100, mesurée par le capteur de vitesse 5, est nulle.

Si la vitesse V est nulle, alors la source d'air est déterminée comme étant un environnement extérieur du véhicule automobile. En effet, lorsque le véhicule est arrêté, les usagers du véhicule doivent avoir la possibilité de manipuler les ouvrants du véhicule. Pour cela, il est nécessaire que l'air de l'habitacle soit relié, via les extracteurs d'air, à l'air extérieur au véhicule, notamment pour pouvoir évacuer aisément une surpression de l'air de l'habitacle induite par une fermeture ou un claquement de porte. Si l'air de l'habitacle était relié à l'air du premier système de climatisation 10, l'évacuation de la surpression pourrait être ralentie, ce qui gênerait la fermeture des ouvrants et nuirait au confort des usagers.

L'étape E0 comprend en outre une mesure d'une température de la batterie TBAT et une comparaison de la température de la batterie TBAT à un seuil maximal de température TMAX.

Le seuil TMAX correspond à la borne supérieure d'une plage de températures de la batterie 1 correspondant à un fonctionnement optimal de la batterie 1. Cette plage de température comprend une borne inférieure TMIN. Les seuils TMIN et TMAX dépendent du type de batterie. Pour des cellules de batterie de type Li-ion, TMIN peut par exemple être proche de 20 degrés, et TMAX peut être proche de 40 degrés.

La température TBAT de la batterie est mesurée par le capteur 12 de température de la batterie. Lorsque la température TBAT est inférieure au seuil maximal TMAX, alors la source d'air est déterminée comme étant le deuxième système de climatisation 20.

Sinon, on se situe dans le cas où la température de la batterie est trop élevée. La source d'air sera déterminée comme étant celle de plus faible température. Pour cela, on compare une température extérieure TEXT mesurée par le capteur 4 à la température de l'habitacle THAB :
- si la température extérieure TEXT est inférieure à la température de l'habitacle THAB, alors la source d'air est déterminée comme étant l'environnement extérieur du véhicule automobile,
- sinon la source d'air est déterminée comme étant le deuxième système de climatisation 20.

A l'issue de l'étape E0,
- si la source d'air est l'environnement extérieur du véhicule, on enchaine sur l'étape E1 d'isolation entre le premier système de climatisation 10 et le deuxième système de climatisation 20,
- si la source d'air est le deuxième système de climatisation 20, on enchaine sur l'étape E2 de raccordement du premier système de climatisation 10 au deuxième système de climatisation 20.

L'étape E1 d'isolation comprend un agencement du volet mobile 304 de la vanne aéraulique 30 selon la deuxième configuration C2. Autrement dit, dans l'étape E1 on commande le volet 304 pour qu'il se place dans la deuxième configuration C2. Ainsi, les flux d'air des premier et deuxième systèmes de climatisation sont isolés l'un de l'autre, le deuxième système de climatisation 20 expulsant l'air de l'habitacle vers l'air extérieur et l'entrée d'air 102 du premier système de climatisation 10 étant reliée à l'air extérieur.

Dans un mode d'exécution, l'étape E1 peut comprendre une activation du premier ventilateur 104 générant ou favorisant un flux d'air à proximité de la batterie 1, le flux d'air étant issu de l'air extérieur. En effet, sans mise en œuvre du ventilateur 104, la création d'un écoulement d'air dans le boîtier 11 est peu probable.

De plus, l'étape E1 comprend préférentiellement une mise en œuvre du moyen conventionnel de climatisation 101 qui assurera la climatisation des cellules de batteries placées à proximité du moyen conventionnel de climatisation 101.

L'étape E2 met en œuvre une phase d'utilisation d'un air prélevé en sortie d'un extracteur disposé sur une ouverture de l'habitacle, pour climatiser la batterie d'alimentation d'un moteur électrique d'entrainement du véhicule automobile. Autrement dit l'étape E2 met en œuvre un recyclage de l'air de l'habitacle pour climatiser la batterie.

A cet effet, l'étape E2 comprend un agencement du volet mobile 304 de la vanne aéraulique 30 selon la première configuration C1. Autrement dit, dans l'étape E2 on commande le volet 304 pour qu'il se place dans la première configuration C1. Ainsi, le flux d'air des deuxième et premier systèmes de climatisation sont reliés l'un à l'autre, le deuxième système de climatisation 20 expulsant l'air de l'habitacle vers le premier système de climatisation 10, pour climatiser la batterie 1.

L'étape E2 comprend en outre :
- une comparaison de la température de la batterie TBAT au seuil minimal de température TMIN et au seuil maximal de température TMAX, puis
- une mise en œuvre du moyen conventionnel de climatisation 101 si la température de la batterie TBAT est supérieure ou égale au seuil de température maximal TMAX, ou inférieure ou égale au seuil de température minimal TMIN, ou
- un arrêt du moyen conventionnel de climatisation 101 si la température de la batterie TBAT est comprise entre le seuil minimal de température TMIN et le seuil maximal de température TMAX.

Lorsque la température TBAT se situe dans la plage de températures optimale, alors le moyen conventionnel de climatisation 101 est arrêté, la climatisation de la batterie 1 étant alors assurée par le passage du flux d'air climatisé en provenance de l'habitacle 2.

En revanche, si la température TBAT se situe en dehors de la plage de températures optimale, le moyen conventionnel de climatisation 101 est démarré afin de ramener la température TBAT dans la plage de fonctionnement optimal de la batterie 2.

Dans l'étape E2, le premier ventilateur 104 du premier système de climatisation 10 est commandé pour garantir la bonne circulation de l'air dans l'habitacle 2. Autrement dit, la vitesse de rotation du premier ventilateur 104 est déterminée pour permettre un écoulement de l'air dans le boîtier 11, notamment entre les cellules de batterie, sans générer une surpression, car cette surpression dans le boîtier 11 se répercuterait dans l'habitacle 2 et créerait un inconfort pour les usagers du véhicule.

Dans un mode de réalisation, la deuxième étape E2 comprend une mesure de la vitesse VVH de rotation du deuxième ventilateur 201 par le capteur 202. La vitesse de rotation VVB du premier ventilateur 104 peut alors être déterminée en fonction la vitesse de rotation du deuxième ventilateur 201, notamment proportionnellement à la vitesse de rotation du deuxième ventilateur 201.

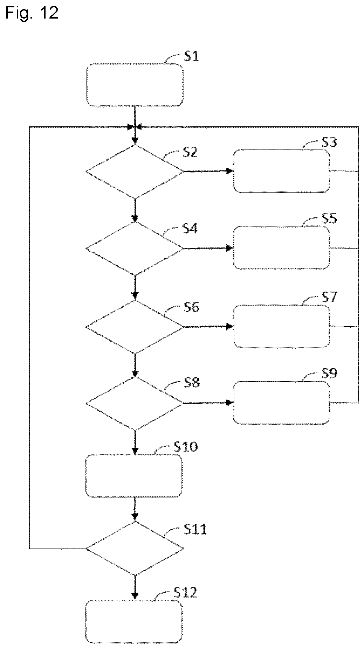

La figure 12 fournit une représentation plus détaillée d'un mode d'exécution du procédé de commande d'un ensemble de climatisation.

Dans une première étape S1, le volet 305 est placé dans la deuxième configuration C2, c'est-à-dire les deux systèmes de climatisation sont isolés l'un de l'autre.

Dans une deuxième étape S2, on teste si le véhicule est arrêté, c'est-à-dire si la vitesse V de déplacement du véhicule est nulle :
- si la vitesse V est nulle, alors on enchaine sur une troisième étape S3 dans laquelle le volet 305 est placé dans la deuxième configuration C2 (les deux systèmes de climatisations sont donc isolés l'un de l'autre), et on reboucle sur l'étape S2,
- sinon on enchaine sur une quatrième étape S4.

Dans la quatrième étape S4, on teste si la température TBAT de la batterie 1 se situe dans la plage de températures optimales, c'est-à-dire entre les seuils TMIN et TMAX :
- si c'est le cas, alors on enchaine sur une cinquième étape S5 dans laquelle le volet 305 est placé dans la première configuration C1 (l'air de l'habitacle étant donc recyclé dans le système de climatisation de la batterie), et dans laquelle le moyen de climatisation conventionnel 101 est arrêté, puis on reboucle sur la deuxième étape S2,
- sinon, cela signifie que la batterie n'est pas tempérée, on enchaine sur une sixième étape S6.

Dans la sixième étape S6, on teste si la température TBAT de la batterie 1 est inférieure au seuil TMIN :
- si c'est le cas, alors on enchaine sur une septième étape S7 dans laquelle le volet 305 est placé dans la première configuration (l'air de l'habitacle est donc recyclé dans le système de climatisation de la batterie), et dans laquelle le moyen de climatisation conventionnel 101 est démarré, puis on reboucle sur la deuxième étape S2,
- sinon, cela signifie que la température de la batterie est supérieure au seuil de température maximal ; on enchaine alors sur une huitième étape S8.

Dans la huitième étape S8, on compare la température THAB de l'habitacle à la température extérieure TEXT :
- si la température THAB de l'habitacle est inférieure à la température extérieure TEXT, alors on enchaine sur une dixième étape S10 dans laquelle le volet 305 est placé dans la première configuration C1 (l'air de l'habitacle est donc recyclé dans le système de climatisation de la batterie), et dans laquelle le moyen de climatisation conventionnel 101 est démarré, puis on enchaine sur une onzième étape S11,
- sinon, alors on enchaine sur une neuvième étape S9 dans laquelle le volet 305 est placé dans la deuxième configuration C2 (les deux systèmes de climatisations sont donc isolés l'un de l'autre et la batterie est climatisée avec l'air extérieur) et dans laquelle le moyen de climatisation conventionnel 101 est démarré, et on reboucle sur la deuxième étape S2.

Dans la onzième étape S11, on évalue si le véhicule est arrivé en fin de trajet :
- si c'est le cas, alors on enchaine sur une douzième étape S12 dans laquelle le volet 305 est placé dans la deuxième configuration C2 (les deux systèmes de climatisations sont donc isolés l'un de l'autre) et dans laquelle la batterie est climatisée avec l'air extérieur,
- sinon on reboucle sur l'étape S2.

Finalement, l'invention permet d'améliorer la climatisation d'une batterie de moteur électrique d'entrainement d'un véhicule automobile.

En étant relié à un extracteur d'air de l'habitacle, le système de climatisation pour batterie bénéficie d'un air déjà climatisé, généralement à une température se situant dans la plage de température optimale pour les cellules de batterie. Ainsi, le passage de ce flux d'air à proximité des cellules de batterie peut suffire à maintenir la batterie dans une plage de température optimale. L'utilisation d'un moyen de climatisation conventionnel pour batterie, de type circuit d'eau ou de fluide réfrigérant, est alors limitée aux situations où la température de la batterie se situe au-dessus de la plage de température optimale alors que la température de l'habitacle est supérieure à la température extérieure. Ainsi, l'invention permet de limiter fortement la consommation d'énergie liée à l'utilisation d'un moyen de climatisation conventionnel pour batterie.

Par ailleurs, l'invention améliore les systèmes de l'art antérieur utilisant l'air climatisé de l'habitacle pour climatiser une batterie de véhicule. En effet, dans les systèmes de l'art antérieur, l'extraction de l'air de l'habitacle ne s'effectue pas au niveau d'un extracteur d'air de l'habitacle. Un premier flux d'air de la climatisation de l'habitacle peut donc s'échapper sans résistance vers l'environnement extérieur du véhicule via l'extracteur d'air, et le système de climatisation de la batterie doit créer un deuxième flux d'air, concurrent du premier flux d'air, pour son utilisation dans le système de climatisation de la batterie. La création de ce deuxième flux d'air nécessite alors une forte dépense d'énergie pour actionner un ventilateur. Dans l'invention, le flux d'air climatisé issu de l'extracteur génère une surpression dans le système de climatisation pour batterie, cette surpression favorisant naturellement le déplacement de l'air notamment au contact des cellules de batterie. L'usage d'un ventilateur en amont de la batterie pourrait toutefois s'avérer nécessaire pour accélérer l'écoulement de l'air dans le système de climatisation pour batterie et ainsi éviter une surpression inconfortable dans l'habitacle. Quoi qu'il en soit, la puissance de ventilation nécessaire dans le système de climatisation pour batterie selon l'invention est nettement réduite par rapport à celle utilisée par les systèmes décrits dans l'état antérieur. Cette réduction de la puissance de ventilation nécessaire entraine non seulement une réduction de la consommation d'énergie par rapport aux systèmes de l'état antérieur, mais aussi une réduction du bruit généré dans l'habitacle par le système de climatisation pour batterie. La réduction de bruit est par ailleurs majorée par le fait que, dans l'invention, l'extracteur d'air peut jouer un rôle d'isolation phonique entre l'habitacle et le système de climatisation.

De plus la réduction du bruit généré dans l'habitacle par le système de climatisation selon l'invention permet d'utiliser ce système de climatisation même lorsque le véhicule se déplace à vitesse réduite, ce qui n'était pas le cas avec les systèmes de l'art antérieur.

L'invention permet de disposer la batterie hors de l'habitacle et d'alimenter le système de climatisation de la batterie avec l'air de l'habitable sans créer une nouvelle ouverture dans la caisse du véhicule automobile. Ce point constitue un avantage car une nouvelle ouverture dans la caisse peut fragiliser la structure de la caisse. De plus une nouvelle ouverture dans la caisse est susceptible d'augmenter le niveau de bruit dans l'habitacle.

Ainsi, en réduisant la consommation d'énergie du système de climatisation pour batterie, l'invention permet de réduire les émissions de polluants (et de CO2) dans le cas d'un véhicule hybride et d'augmenter l'autonomie d'un véhicule électrique ou d'un véhicule hybride en phase de roulage électrique.

## Revendications

1. Vanne aéraulique (30) comprenant
- une première ouverture (301) destinée à être raccordée à une ouverture (21) d'un habitacle (2) d'un véhicule automobile (100), l'ouverture de l'habitacle étant destinée à être équipée d'un extracteur d'air (6) et la vanne (30) étant destinée à être située à l'extérieur de l'habitacle (2), et
- une deuxième ouverture (302) destinée à être raccordée à un circuit aéraulique de climatisation d'une batterie d'alimentation d'un moteur électrique d'entraînement d'un véhicule automobile.

2. Vanne aéraulique (30) selon la revendication précédente, **caractérisée en ce que** la première ouverture (301) comprend un extracteur d'air (6) destiné à équiper une ouverture (21) de l'habitacle (2).

3. Vanne aéraulique (30) selon l'une des revendications précédentes, **caractérisée en ce qu'**elle comprend une troisième ouverture (303) destinée à être raccordée à un environnement extérieur d'un véhicule automobile et un volet (304),
et **en ce que** le volet (304) est agencé de sorte à :
- mettre en communication les première et deuxième ouvertures (301, 302) dans une première configuration (C1) du volet, et
- mettre en communication les première et troisième ouvertures (301, 303) et/ou mettre en communication les deuxième et troisième ouvertures (302, 303) dans une deuxième configuration (C2) du volet.

4. Ensemble de climatisation (50) comprenant
- un premier système de climatisation (10) d'une batterie d'alimentation (1) d'un moteur électrique d'entraînement d'un véhicule automobile (100),
- un deuxième système de climatisation (20) d'un habitacle (2) du véhicule automobile (100), et
- une vanne aéraulique (30) selon l'une des revendications précédentes, la première ouverture (301) de la vanne aéraulique étant raccordée à une ouverture de l'habitacle (21), et la deuxième ouverture (302) étant raccordée à un circuit aéraulique du premier système de climatisation (10).

5. Véhicule automobile (100) comprenant un ensemble de climatisation (50) selon la revendication précédente.

6. Procédé de commande d'un ensemble (50) de climatisation d'un véhicule automobile (100), notamment procédé de commande d'un ensemble (50) selon la revendication 4, comprenant une phase d'utilisation d'un air prélevé en sortie d'un extracteur d'air (6) disposé sur une ouverture (21) d'un habitacle (2) du véhicule automobile (100), pour climatiser une batterie d'alimentation (1) d'un moteur électrique d'entrainement du véhicule automobile (100).

7. Procédé de commande selon la revendication précédente, **caractérisé en ce qu'**il comprend les étapes suivantes :
- une étape (E0) de détermination d'une source d'air d'un premier système de climatisation (10) de l'ensemble de climatisation (50), la source d'air pouvant être un environnement extérieur du véhicule automobile (100), ou la source d'air pouvant être issue d'un deuxième système de climatisation (20) de l'ensemble de climatisation (50),
- une étape (E1) d'isolation entre le premier système de climatisation (10) et le deuxième système de climatisation (20), lorsque la source d'air est l'environnement extérieur du véhicule automobile (100), et une étape (E2) de raccordement du premier système de climatisation (10) au deuxième système de climatisation (20) lorsque la source d'air est issue du deuxième système de climatisation (20).

8. Procédé de commande selon la revendication précédente, **caractérisé en ce que** :
- l'étape (E1) d'isolation comprend un agencement d'un volet mobile (304) d'une vanne aéraulique (30) de l'ensemble de climatisation (50) selon une deuxième configuration (C2), et
- l'étape (E2) de raccordement comprend un agencement du volet mobile (304) de la vanne aéraulique (30) de l'ensemble de climatisation (50) selon une première configuration (C1).

9. Procédé selon l'une des revendications 7 ou 8, **caractérisé en ce que** l'étape de détermination (E0) d'une source d'air du premier système de climatisation (10) comprend :
- une mesure d'une vitesse de déplacement (V) du véhicule automobile (100), et/ou
- une mesure d'une température (THAB) de l'habitacle (2) équipé du deuxième système de climatisation (20), et/ou
- une mesure d'une température de l'air extérieur (TEXT), et/ou
- une mesure d'une température (TBAT) d'une batterie d'alimentation (1) d'un moteur électrique d'entraînement du véhicule automobile (100) et une comparaison de la température de la batterie (TBAT) à un seuil maximal de température (TMAX),
**en ce que** la source d'air est déterminée comme étant issue du deuxième système de climatisation (20) si :
- la vitesse de déplacement (V) du véhicule est non nulle ou supérieure à 10 km/h, et
- la température de la batterie (TBAT) est inférieure au seuil de maximal température (TMAX) ou la température de l'habitacle (THAB) est inférieure à la température extérieure (TEXT),
et **en ce que**, dans les autres cas, la source d'air est déterminée comme étant l'environnement extérieur du véhicule automobile.

10. Procédé selon la revendication précédente, le premier système de climatisation (10) équipant la batterie (1) et le premier système de climatisation (10) comprenant un moyen conventionnel de climatisation (101) de la batterie (1), notamment par eau ou par fluide réfrigérant, **caractérisé en ce que** l'étape (E1) d'isolation comprend une mise en œuvre du moyen conventionnel de climatisation (101), et **en ce que** l'étape (E2) de raccordement comprend
- une comparaison de la température de la batterie (TBAT) à un seuil minimal de température (TMIN) et au seuil maximal de température (TMAX), puis
- une mise en œuvre du moyen conventionnel de climatisation (101) si la température de la batterie (TBAT) est supérieure ou égale au seuil de température maximal (TMAX), ou inférieure ou égale au seuil de température minimal (TMIN), ou
- un arrêt du moyen conventionnel de climatisation (101) si la température de la batterie (TBAT) est comprise entre le seuil minimal de température (TMIN) et le seuil maximal de température (TMAX).

11. Dispositif (60) de commande d'un ensemble (50) de climatisation d'un véhicule (100), le dispositif comprenant des éléments (6, 10, 20, 30, 40, 41,42, 43, 50, 61, 62, 101, 102, 103, 104, 110, 201, 202, 203, 204, 301, 302, 303, 304, 305, 410, 411, 412, 3031, 3032) matériels et/ou logiciels mettant en œuvre le procédé selon l'une des revendications 6 à 10, notamment des éléments matériels (6, 10, 20, 30, 40, 41,42, 43, 50, 61, 62, 101, 102, 103, 104, 110, 201, 202, 203, 204, 301, 302, 303, 304, 305, 3031, 3032) et/ou logiciels conçus pour mettre en œuvre le procédé selon l'une des revendications précédentes, et/ou le dispositif comprenant des moyens de mettre en œuvre le procédé selon l'une des revendications 6 à 10.

12. Produit programme d'ordinateur comprenant des instructions de code de programme enregistrées sur un support lisible par ordinateur pour mettre en œuvre les étapes du procédé selon l'une quelconque des revendications 6 à 10 lorsque ledit programme fonctionne sur un ordinateur ou produit programme d'ordinateur téléchargeable depuis un réseau de communication et/ou enregistré sur un support de données lisible par un ordinateur et/ou exécutable par un ordinateur, caractérisé en ce en ce qu'il comprend des instructions qui, lorsque le programme est exécuté par l'ordinateur, conduisent celui-ci à mettre en œuvre le procédé selon l'une quelconque des revendications 6 à 10.

13. Support d'enregistrement de données, lisible par un ordinateur, sur lequel est enregistré un programme d'ordinateur comprenant des instructions de code de programme de mise en œuvre du procédé selon l'une des revendications 6 à 10 ou selon la revendication 12 ou support d'enregistrement lisible par ordinateur comprenant des instructions qui, lorsqu'elles sont exécutées par un ordinateur, conduisent celui-ci à mettre en œuvrele procédé selon l'une quelconque des revendications 6 à 10.
